# EUROPEAN PATENT SPECIFICATION

(11) **EP 0 314 641 B1**
(45) Date of publication and mention of the grant of the patent: **29.09.1993**
(21) Application number: 88830440.9
(22) Date of filing: 25.10.1988
(51) Int. Cl.: B60T 11/18, B60T 11/20, B62D 11/08

(54) **A hydraulic braking circuit for tractors**
Hydraulischer Bremskreis für Zugmaschinen.
Circuit hydraulique de freinage pour tracteurs

(30) Priority: 26.10.1987 IT 6789187
(43) Date of publication of application: 03.05.1989
(73) Proprietor: SAME S.p.A., I-24047 Treviglio (Bergamo) (IT)
(72) Inventor: Bisleri, Secondo, I-24047 Treviglio (Bergamo) (IT)
(74) Representative: Bosotti, Luciano

(56) References cited:
- EP-A- 0 030 883
- EP-A- 0 047 702
- DE-A- 3 140 923
- FR-A- 1 516 570
- FR-A- 2 450 726
- GB-A- 762 084
- GB-A- 2 135 257
- US-A- 3 863 991

## Description

The present invention relates to hydraulic braking circuits for tractors, including a right-hand pedal and a left hand pedal with which respective hydraulic pumps are associated for operating the braking members of the right-hand and left-hand front and rear wheels through respective first and second pipes.

In conventional braking circuits of this type, the separate operation of one pedal or the other causes the braking of the front and rear wheels on the corresponding side (right or left) and the reduction of the steering radius of the tractor.

In some conditions of use of the tractor, the problem may arise that, during braking achieved by means of the separate operation of one pedal or the other, the corresponding front wheel which is braked may slip on the ground with the risk of damage to the crops.

In order to overcame this drawback, US-A-3 863 991 discloses a hydraulic braking circuit of the above-mentioned type including valve means situated in the first pipes connecting the two pumps to the braking members of the right-hand and left-hand front wheels for preventing the braking of the front wheels when the control pedals are operated separately. The valve means are adapted to automatically open when the control pedals are operated together to produce four wheel braking, through hydraulic cross-piloting means. According to this known solution, the operator is allowed to automatically apply all four brakes by depressing both brake pedals, or only the left rear brake by depressing only the left pedal, or only the right rear brake by depressing only the right pedal. However, there is no possibility of applying also both left or right rear and front brakes,as it would be desirable and useful in some circumstances, i.e. when operating on non-slippery ground.

The object of the present invention is to avoid the above problem and this object is achieved by virtue of the fact that the said valve means comprise two on-off normally closed valves with associated manually-operate control means selectively switchable between an operative position, in which the on-off valves are normally open and closure thereof is prevented, and an inoperative position corresponding to the normally closed condition of said on-off valves.

The on-off valve means conveniently comprise:
two one way valves with ball obturators, each inserted in the respective first pipe downstream of the second pipe to prevent communication between the respective pump and the front brake,
a pair of right-hand and left-hand hydraulic cylinders associated with the two one-way valves and each carrying a piston with a push-rod facing the ball obturator of the respective one-way valve, the right-hand and left-hand cylinders being connected by means of piloting lines to the left-hand pump and to the right-hand pump respectively, in order to keep the two ball obturators in the open position by means of the push-rod pistons when the two pedals are operated together,
a shaft with eccentrics operatively associated with the push-rod pistons and rotatable between two positions, in the first of which the closure of the two ball obturators is enabled and in the second of which their closure is prevented.

The invention will now be described in detail with reference to the appended drawings, provided purely by way of non-limiting example, in which
Figure 1 shows a braking circuit for tractors according to the invention, in diagrammatic form,
Figure 2 is an elevational view of one of the components of the circuit of Figure 1,
Figure 3 is a section taken on the line III-III of Figure 2, and
Figure 4 is a diagrammatic view which shows the various operating conditions of the braking circuit according to the invention.

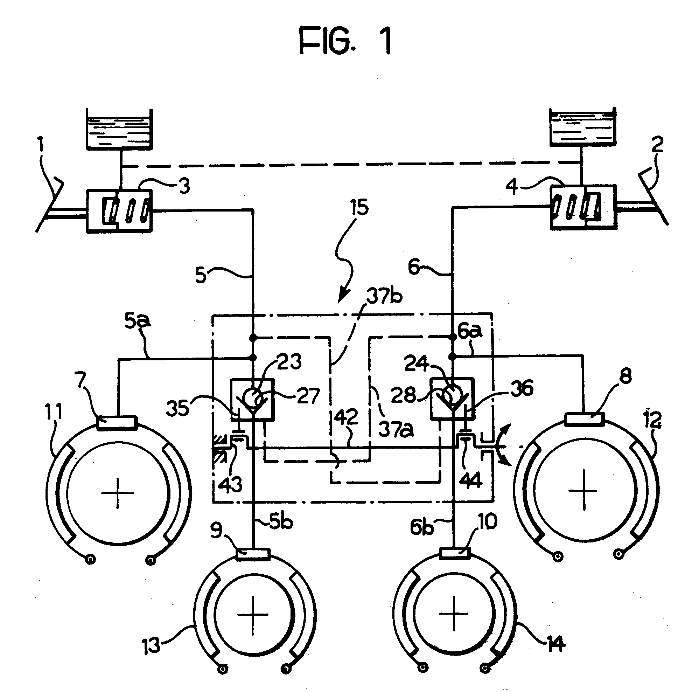

With reference initially to Figure 1, the hydraulic braking circuit for tractors according to the invention comprises essentially a right-hand pedal 1 and a left-hand pedal 2, each of which operates a piston pump 3, 4 for the pressurising of hydraulic fluid contained in a line 5, 6. In effect, each line 5,6 leads to respective first and second pipes 5a, 5b and 6a, 6b leading to the hydraulic actuators 7, 8 and 9, 10 of the brakes of the right-hand and left-hand rear wheels 11, 12 and the right-hand and left-hand front wheels 13, 14.

A manually-operable on-off valve unit is generally indicated 15 and has the function of enabling the shutting-off of the front brakes 13, 14 when the respective pedals 1, 2 are operated separately.

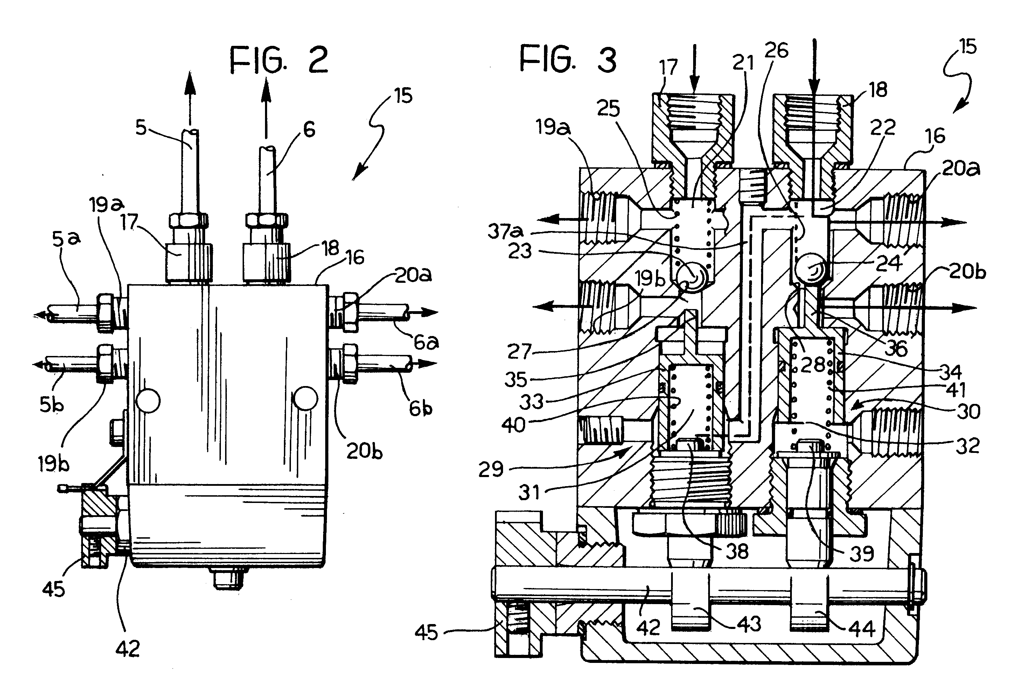

With reference in greater detail to Figures 2 and 3, the valve unit 15 comprises a body 16 provided with tubular inlet connectors 17, 18 connected to the two lines 5 and 6, and two pairs of outlet connectors 19a, 19b and 20a, 20b connected to the pipes 5a, 5b and 6a, 6b, respectively.

With reference in greater detail to Figure 3, the inlet connectors 17 and 18 communicate with respective chambers 21, 22 in which ball obturators 23, 24 thrust towards the respective annular valve seats 27, 28 by the action of springs 25, 26 are inserted. The chambers 21, 22 communicate at their upper ends with outlet connectors 19a, 20a connected to the pipes 5a, 6a of the rear brakes 11 and 12, and are connected through the valve seats 27 and 28 to the tubular connectors 19b, 20b connected to the pipes 5b, 6b of the front brakes 13 and 14. The chambers 21 and 22 also communicate axially, still through the annular valve seats 27 and 28, with two hydraulic cylinders 29, 30 each including a cylinder 31, 32 in which a hollow piston 33, 34 provided with an axial push rod 35, 36 adapted to cooperate with the respective ball obturator 23, 24, in the manner explained below, is sealingly movable axially. The cylinder 31, and hence the cavity of the piston 33, communicates with the region of the chamber 22 adjacent the inlet connector 18 through a passage 37a.

Similarly, the cylinder 32, and hence the cavity of the piston 34, communicates with the region of the chamber 21 adjacent the inlet connector 17 through a similar passage. This passage is not visible in Figure 3 but is indicated schematically 37b in Figure 1.

At their ends opposite the respective push rods 35 and 36, the two pistons 33 and 34 bear on respective rods 38, 39 which are axially slidable within the cylinders 31, 32 against the action of respective biassing springs 40, 41.

The rods 38, 39 are operatively associated with a rotatable shaft 42 provided with two eccentric cams 43, 44 and rotatable by means of an operating member 45 which projects from the body 16 and is connected by means of a transmission, not illustrated, to a manual or motor-driven control operable by the driver of the tractor.

In practice, the valve unit 15 constitutes a double one-way valve with cross-piloting, the manual operation of which enables the operation of the front brakes 13 and 14 to be prevented when the brake control pedals 1 and 2 are operated separately, but which ensures the operation of the front brakes 13 and 14 when the pedals 1 and 2 are operated together.

The valve 15 operates as follows, starting from the operative condition illustrated in Figure 3 with reference to the one-way valve 23-27 associated with the right-hand brakes 11 and 13 (the other one-way valve 24-28 associated with the left-hand brakes 12 and 14 being illustrated in a different operative condition in the same drawing).

This condition corresponds to the inoperative position of the control shaft 42, which corresponds to the lowered positions of the rods 38 and 39. In this position, the separate operation of one or other of the pedals 1, 2 causes the closure of the respective one-way valve. With reference, in the case in question, to the operation of the right-hand pedal 1, the pressurised fluid from the inlet connector 17 is directed through the outlet connector 19a and the pipe 5a to the actuator 7 of the right-hand rear brake 11, causing the closure of the valve seat 27 by the ball obturator 23 and therefore the isolation of the outlet connector 19b. The operation of the actuator 9 of the right-hand front brake 13 is consequently prevented.

In order to enable the operation of the two front brakes 13 and 14, it is sufficient to rotate the shaft 42 by 180° from the position of Figure 3 so as to raise the rods 38 and 39, and therefore the pistons 33 and 34 with their push rods 35 and 36, by means of the cams 43 and 44. In this condition, the two ball obturators 23 and 24 are kept away from their valve seats 27 and 28, enabling the passage of the pressurised oil from the inlet connectors 17 and 18 to the outlet connectors 19b and 20b, and consequently the operation of the actuators 9 and 10 of the front brakes 13 and 14. In this position of the control shaft 42, the operation of the front brakes 13 and 14 is enabled both in the case of the separate operation of the two pedals 1 and 2 and in the case of their operation together.

The operation of the front brakes 13 and 14 is also enabled, however, when the two pedals 1 and 2 are operated together with the shaft 42 in the position described above, that is, with the push rods 35 and 36 of the two pistons 33 and 34 withdrawn and spaced from the respective ball obturators 23 and 24. In fact, in these circumstances, shown in Figure 3 with reference to the one-way valve 24-28 associated with the left-hand brakes 12 and 14, the pressure of the fluid in the chamber 21, transmitted to the chamber 32 through the line 37b, and the pressure of the fluid in the chamber 22, transmitted to the chamber 31 through the line 37a, cause the simultaneous raising of the pistons 33 and 34 and the consequent movement of the ball obturators 23 and 24 away from their seats 27 and 28. Therefore, when the two control pedals 1 and 2 are operated simultaneously, the fluid from the inlet connectors 17 and 18 reaches the outlet connectors 19b and 20b and therefore the actuators 9 and 10 of the front brakes 13 and 14, regardless of the position of the control shaft 42.

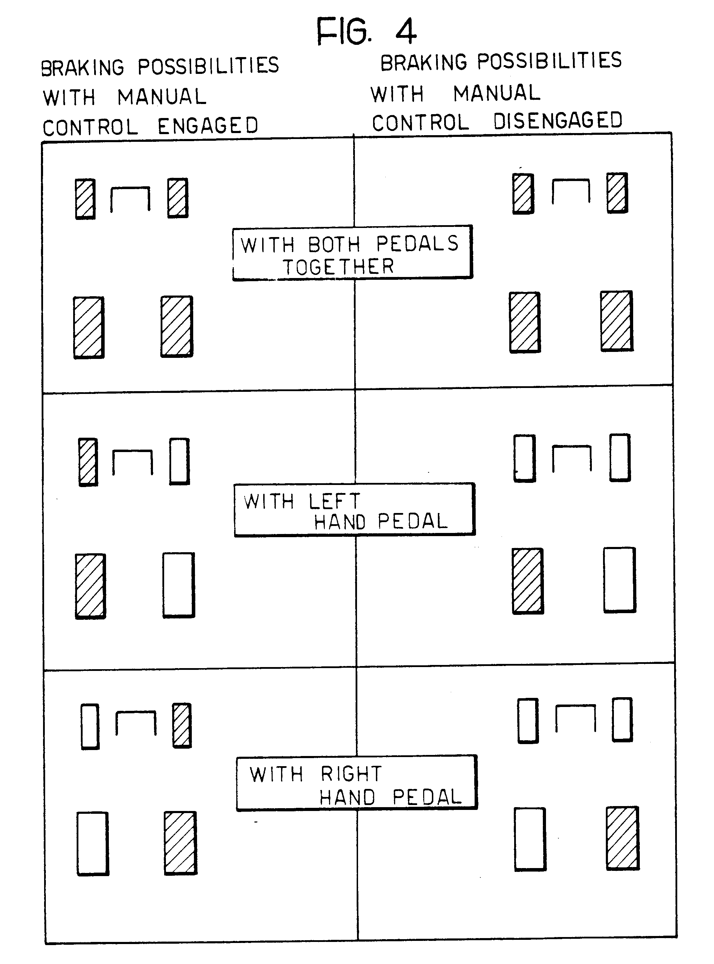

Figure 4 shows the various braking possibilities of the tractor using the circuit according to the invention: In this drawing, the wheels which are braked are those which are hatched.

The upper part of the drawing shows the condition which corresponds to the simultaneous operation of the two operating pedals 1 and 2: simultaneous braking of the four wheels is ensured both with the shaft 42 in its operative position and with this shaft in its inoperative position.

The middle part of the drawing shows the condition which corresponds to the individual operation of the left-hand pedal 2: both the wheels on the left-hand side of the tractor are braked in the operative position of the shaft 42, whilst only the left-hand rear wheel is braked in the inoperative position of the shaft 42.

The lower part of Figure 4 shows the situation which corresponds to the separate operation of the right-hand pedal 1: as in the previous case, both the wheels on the right-hand side of the tractor are braked when the shaft 42 is in its operative position, whilst only the right-hand rear wheel is braked when the shaft 42 is in its inoperative position.

It will he clear from the above description that the circuit according to the invention enables a selective braking of the front wheels of the tractor to be achieved with the elimination of the problems of conventional braking systems in which the braking of the front wheels cannot be selectively applied or prevented with the separate operation of the two pedals.

## Claims

1. A hydraulic braking circuit for tractors, comprising a right-hand pedal (1) and a left-hand pedal (2) with which respective hydraulic pumps are associated for operating the braking members (9, 10, 7, 8) of the right-hand and left-hand front and rear wheels through respective first and second pipes (5b, 6b, 5a, 6a), and valve means (15) situated in the first pipes (5b, 6b) connecting the two pumps (3, 4) to the braking members (9, 10) of the right-hand and left-hand front wheels (13, 14), sails valve means (15) preventing the braking of the front wheels (13, 14) when the control pedals (1, 2) are operated separately, and being adapted to automatically open when the control pedals (1, 2) are operated together, through hydraulic cross-piloting means (37a, 37b), characterized in that the said valve means (15) comprise two on-off normally closed valves (23, 27; 24, 28) with associated manually-operated control means (42) selectively switchable between an operative position, in which the on-off valves are normally open and closure thereof is prevented, and an inoperative position corresponding to the normally closed condition of said on-off valves.

2. A circuit according to Claim 1, characterized in that the on-off valves comprise:
two one-way valves (23, 27; 24, 28) with ball obturators (23, 24), each inserted in the respective first pipe (5b, 6b) downstream of the second pipe (5a, 6a) to prevent communication between the respective pump (3, 4) and the corresponding front brake (13, 14),
a pair of right-hand and left-hand hydraulic cylinders (29, 30) associated with the two one-way valves (23, 27; 24, 28) and each carrying a piston with a push-rod (33, 35; 34, 36) facing the ball obturator (23, 24) of the respective one-way valve (23, 27; 24, 28), the right-hand and left-hand cylinders (29, 30) being connected by means of piloting lines (37a, 37b) to the left-hand pump (4) and to the right-hand pump (3) respectively, in order to keep the two ball obturators (23, 24) in the open position by means of the push-rod pistons (33, 35; 34, 36) when the two pedals (1, 2) are operated together,
a shaft (42) with eccentrics (43, 44) operatively associated with the push-rod pistons (33, 35; 34, 36) and rotatable between two-positions, in the first of which the closure of the two ball obturators (23, 24) is enabled and in the second of which their closure is prevented.

## Patentansprüche

1. Hydraulischer Bremskreis für Zugmaschinen mit einem rechten Pedal (1) und einem linken Pedal (2), mit denen jeweilige Hydraulikpumpen verbunden sind, um durch zugehörige erste und zweite Rohre (5b, 6b, 5a, 6a) Bremselemente (9, 10, 7, 8) der rechten und linken vorderen und hinteren Räder zu betätigen, wobei eine Ventileinrichtung (15) in den ersten Rohren (5b, 6b) angeordnet ist, die die zwei Pumpen (3, 4) mit den Bremselementen (9, 10) der rechten und der linken Vorderräder (13, 14) verbindet, wobei die Ventileinrichtung (15) das Bremsen der Vorderräder (13, 14) verhindert, wenn die Steuerpedale (1, 2) getrennt betätigt werden, und automatisch durch eine hydraulische Querverbindungseinrichtung (37a, 37b) öffnet, wenn die Steuerpedale (1, 2) gemeinsam betätigt werden,
**dadurch gekennzeichnet**, daß
die Ventileinrichtung (15) zwei normalerweise geschlossene Ein-Aus-Ventile (23, 27; 24, 28) mit einer zugehörigen manuellbetätigten Steuereinrichtung (42) enthält, die zwischen einer operativen Position, in der die Ein-Aus-Ventile normalerweise geöffnet sind und ihr Schließen verhindert ist, und einer inoperativen Position schaltbar ist, die dem normalerweise geschlossenen Zustand der Ein-Aus-Ventile entspricht.

2. Kreis nach Anspruch 1,
dadurch gekennzeichnet, daß die Ein-Aus-Ventile enthalten:
zwei Einwegventile (23, 27; 24, 28) mit Kugelverschlüssen (23, 24), die jeweils in das zugehörige erste Rohre (5b, 6b) stromabwärts des zweiten Rohres (5a, 6a) eingesetzt sind, um eine Verbindung zwischen der jeweiligen Pumpe (3, 4) und der zugehörigen vorderen Bremse (13, 14) zu verhindern,
ein Paar rechter und linker hydraulischer Zylinder (29, 30), die mit den zwei Einwegventilen (23, 27; 24, 28) verbunden sind und jeweils einen Kolben mit einer Druckstange (33, 35; 34, 36) halten, die dem Kugelverschluß (23, 24) des zugehörigen Einwegventils (23, 27; 24, 28) zugewandt ist, wobei der rechte und der linke Zylinder (29, 30) mittels der Verbindungsleitungen (37a, 37b) mit der linken Pumpe (4) und der rechten Pumpe (3) verbunden sind, um die zwei Kugelverschlüsse (23, 24) mittels der Druckstangenkolben (33, 35; 34, 36) in der offenen Position zu halten, wenn die zwei Pedale (1, 2) gemeinsam betätigt werden, und eine Welle (42) mit Exzentern (43, 44), die operativ mit den Druckstangenkolben (33, 35; 34, 36) verbunden und zwischen zwei Positionen drehbar ist, in deren erste das Schließen der zwei Kugelverschlüsse (23, 24) ermöglicht und in deren zweite deren Schließen verhindert ist.

## Revendications

1. Circuit hydraulique de freinage pour tracteurs, comprenant une pédale droite (1) et une pédale gauche (2) auxquelles sont associées des pompes hydrauliques correspondantes permettant d'actionner les éléments de freinage (9, 10, 7, 8) des roues avant et arrière droites et gauches par l'intermédiaire de tuyauteries respectives de premières et de secondes tuyauteries (5b, 6b, 5a, 6a), et des moyens de soupape (15) situés dans les premières tuyauteries (5b, 6b) reliant les deux pompes (3, 4) aux éléments de freinage (9, 10) des roues avant droite et gauche (13, 14), lesdits moyens de soupape (15) empêchant le freinage des roues avant (13, 14) lorsque les pédales de commande (1, 2) sont actionnées séparément, et étant prévus pour s'ouvrir automatiquement lorsque les pédales de commande (1, 2) sont actionnées conjointement, grâce à des moyens (37a, 37b) de pilotage croisé,
caractérisé en ce que lesdits moyens de soupape (15) comprennent deux soupapes (23, 27; 24, 28) de marche-arrêt normalement fermées et des moyens de commande associés (42) à commande manuelle pouvant être commutés de façon sélective entre une position active, dans laquelle les soupapes marche-arrêt sont normalement ouvertes et dans laquelle la fermeture de celles-ci est interdite, et une position inactive correspondant à l'état normalement fermé des dites soupapes marche-arrêt.

2. Circuit selon la revendication 1, caractérisé en ce que les soupapes marche-arrêt comprennent:
deux clapets de non-retour (23, 27; 24, 28) comprenant des billes obturatrices (23, 24) insérées chacune dans la tuyauterie correspondante des premières tuyauteries (5b, 6b), en aval de la seconde tuyauterie (5a, 6a), de manière à empêcher la communication entre la pompe respective (3, 4) et le frein avant correspondant (13, 14),
une paire de cylindres hydrauliques gauche et droit (29, 30) associés aux deux clapets de non-retour (23, 27; 24, 28), comportant chacun un piston ayant un poussoir (33, 35; 34, 36) situé face à la bille obturatrice (23, 24) du clapet de non retour correspondant (23, 27; 24, 28), les cylindres droit et gauche (29, 30) étant reliés, par l'intermédiaire de conduites (37a, 37b) de pilotage, respectivement à la pompe gauche (4) et à la pompe droite (3), de manière à maintenir les deux billes obturatrices (23, 24) en position ouverte, au moyen des pistons à poussoir (33, 35; 34, 36), lorsque les deux pédales (1, 2) sont actionnées simultanément, et
un arbre (42) pourvu d'excentriques (43, 44) associés de façon fonctionnelle aux pistons à poussoir (33, 35; 34, 36), l'arbre pouvant être entraîné en rotation entre deux positions, la fermeture des deux billes obturatrices (23, 24) étant autorisée dans une première des deux positions, et leur fermeture étant empêchée dans la deuxième des positions.
